# EUROPEAN PATENT APPLICATION

(11) **EP 0 893 889 A2**
(43) Date of publication of application: **27.01.1999**
(21) Application number: 98107736.5
(22) Date of filing: 28.04.1998
(51) Int. Cl.: H04B 7/005, H04B 1/707

(54) **Method and apparatus for transmission power control in a CDMA communication system**

(30) Priority: 19.07.1997 JP 209638/97
(71) Applicant: MATSUSHITA ELECTRIC INDUSTRIAL CO., LTD., Kadoma-shi, Osaka 571-0050 (JP)
(72) Inventor: Uesugi, Mitsuru, Yokohama-shi, Kanagawa 226 (JP); Kiya, Kazuyuki, Kawasaki-shi, Kanagawa 215 (JP); Kato, Osamu, Yokohama-shi, Kanagawa 223 (JP)
(74) Representative: Grünecker, Kinkeldey, Stockmair & Schwanhäusser Anwaltssozietät

(57) **Abstract**

Pilot symbol 1021 of the first slot and TPC symbol 1022 thereof are transmitted by the same transmission power as that one the commencement of transmission, and the transmission power of data symbol 1023 is made zero. In slots including and after the second slot, pilot symbol 1031 and TPC symbol 1032 are transmitted at the same position as that on the commencement of transmission and by smaller transmission power than that on the commencement of transmission, and further dummy signal 1033 is transmitted, as in the above, by the same transmission power after TPC.

## Description

### BACKGROUND OF THE INVENTION

### Field of the Invention

The present invention relates to a CDMA (code division multiple access) communication system and apparatus, which are used for digital radio communications.

### Description of the Related Art

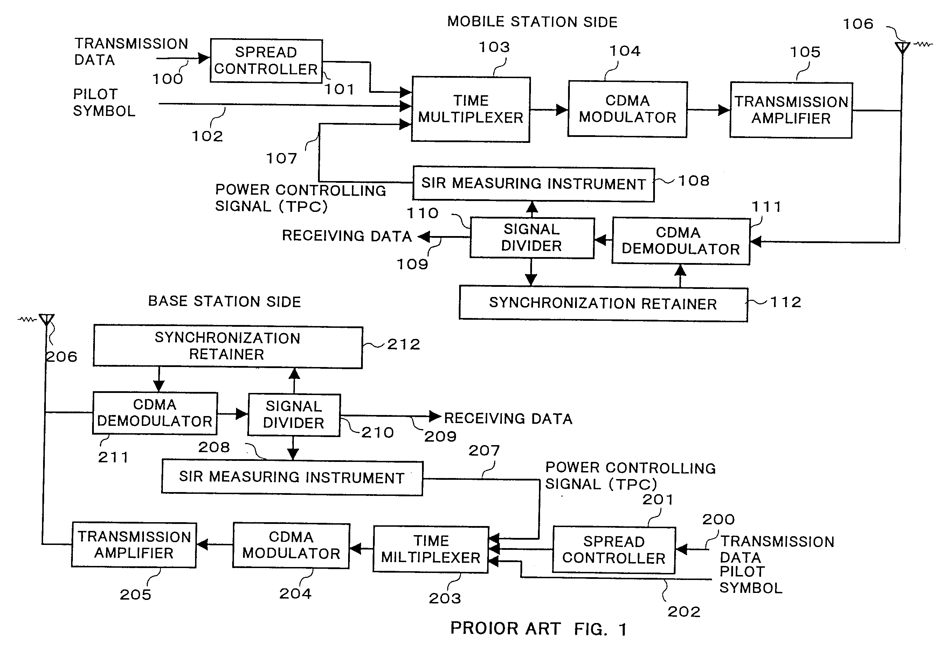

A description is given of prior arts with reference to FIG. 1 through FIG. 3.

FIG. 1 is a configurational view of mobile stations and base station of a conventional CDMA communication system. In FIG. 1, a mobile station of the CDMA communication system comprises of spread controller 101 into which transmission data 100 is inputted, time multiplexer 103 which multiplexes output of the spread controller 101, pilot symbols 102, and power control signals (TPC) described later, CDMA modulator 104, transmission amplifier 105, antenna 106, SIR measurement instrument 108 which outputs the power control signal (TPC) 107 to the time multiplexer 103, signal divider 110 which outputs receiving data 109, CDMA demodulator 111, and synchronization retainer 112.

In other words, the base station of CDMA communication system is composed as in the above. That is, the base station of CDMA communication system is composed of a spread controller 201 into which transmission data 200 is inputted, time multiplexer 203 for multiplexing the output of the spread controller 201, pilot symbol 202, and power control signal (TPC) described later, CDMA modulator 204, transmission amplifier 205, antenna 206, SIR measurement instrument 208 for outputting power control signals (TPC) 207 to the time multiplexer 203, signal divider 210 for outputting receiving data 209, CDMA demodulator 211, and synchronization retainer 212.

A description is given of transmission processing of a mobile station for CDMA communication system, which is constructed as described above. Transmission data 100 is spread controlled by spread controller 101. That is, the transmission data rate is judged, wherein if the rate is low, the transmission data 100 is processed so that a slot having a small amplitude and a long symbol length can be obtained, and if the transmission data rate is great, is processed so that a slot having a large amplitude and a short symbol length can be obtained. The time multiplexer 103 multiplexes the time of the processed results, pilot symbol 102 and power control signal (TPC) 107 obtained by SIR measurement instrument 108, and this is modulated for code division multiple access by CDMA modulator 104, is amplified by transmission amplifier 105 and is transmitted through antenna 106.

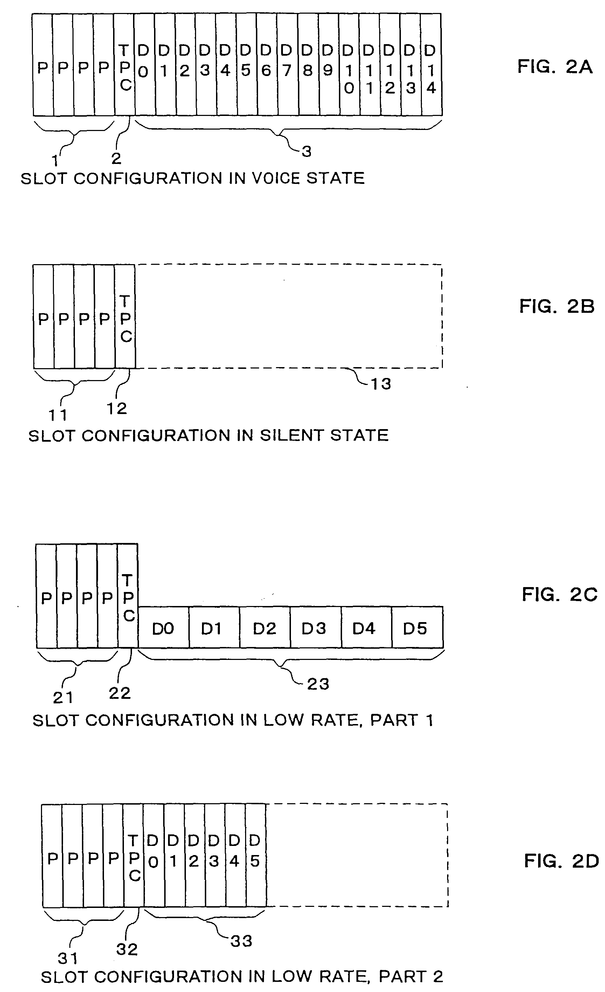

For example, in a case where the transmission data rate is high, data symbol 3 is transmitted by the same transmission power as that of pilot symbol 1 and TPC symbol 2 as shown in FIG. 2A. Furthermore, if there is no data even in a case where the transmission data rate is high, as shown in FIG. 2B, pilot symbol 11 and TPC symbol 12 are transmitted by the same transmission power as that on the commencement of transmission. However, as for the data symbol 13, the transmission power is made 0.

On the other hand, in a case where the transmission data rate is low, as shown in FIG. 2C, pilot symbol 21 and TPC symbol 22 are transmitted by the same transmission power as that on the commencement of transmission, and data symbol 23 is transmitted by small transmission power instead of lengthening the time length of the symbol.

Furthermore, in a case where the transmission data rate is low, as shown in FIG. 2D, pilot symbol 31 and TPC symbol 32 are transmitted by the same transmission power as that on the commencement of transmission and data symbol 33 may be transmitted by the same transmission power as the above. In this case, since only a small quantity of data exists, the transmission is stopped halfway.

With the abovementioned transmission method, the quality of data symbols 23 and 33 can be made equivalent to the quality of data symbol 3.

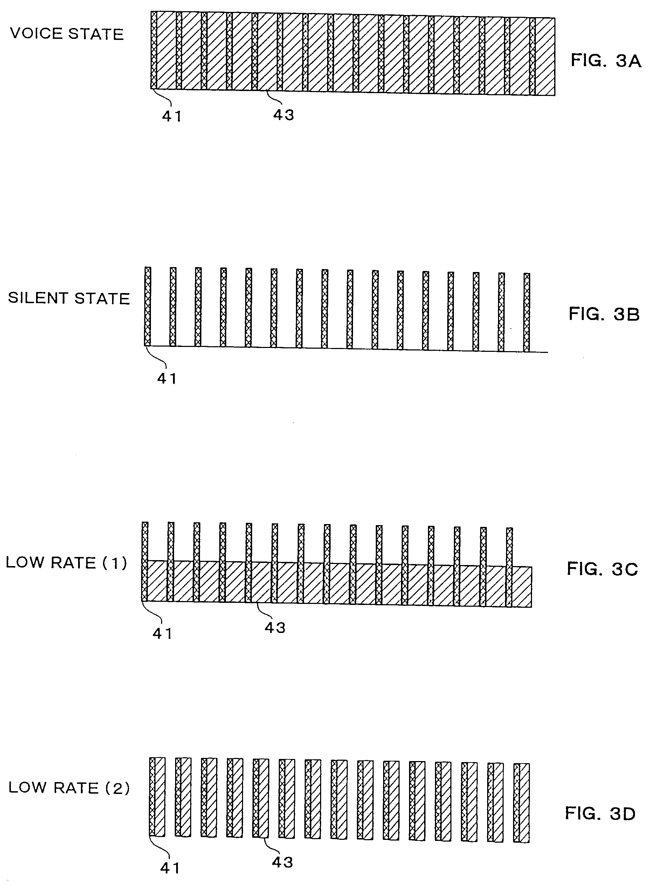

With respect to the entirety of the transmission frames, if the data rate is high, the transmission power pattern becomes as shown in FIG. 3A, and if no data exists, the transmission power pattern becomes as shown in FIG. 3B. If the data rate is low, the transmission power pattern becomes as shown in FIG. 3C and FIG. 3D.

On the other hand, the receiving side of the base station receives data through antenna 206, demodulates the data by CDMA demodulator 211 and separates signals by signal divider 210. Using the pilot symbol, the synchronization retainer 212 retains synchronization, wherein the synchronization is retained so that the received signals can be demodulated in stabilization by CDMA demodulator 211. Furthermore, SIR (signal/interference ratio) of the reverse link circuit is calculated by SIR measurement instrument 208 by using the pilot symbol and TPC symbol. On the basis thereof, power control signal (TPC) 207 which controls the value of the transmission power of the reverse link circuit is calculated.

Furthermore, the processing of transmission at the base station side and reception at a mobile station are the same as those of transmission at the mobile station side and reception at the base station.

As described above, with the conventional CDMA communication system, it is possible to transmit CDMA signals of various rates.

However, in the abovementioned conventional CDMA communication system, in a case where no data exists and the data rate is low, the pattern of transmission power becomes pulse signals of a specified cycle. Resultantly, linear spectra of great power, which influence other apparatuses, are generated in specified frequency constituents, and such a problem arises, by which adverse influences are exerted onto peripheral devices which are easily subjected to receive influences from cyclic signals.

### SUMMARY OF THE INVENTION

It is therefore an object of the invention to provide a CDMA communication system in which no specified cyclic pulse signal is generated even in a case where no transmission data exists and where the transmission data rate is low.

The object is achieved by a CDMA communication apparatus provided with rate judging means which judges the rate of transmission data by the first slot of transmission frame, level controlling means which carries out processing by which the transmission power of transmission control information given to the top of the respective slots after the second slot is made identical to that of the transmission data, and transmission means for transmitting frames processed by uniform transmission power responsive to the result of judgement.

### BRIEF DESCRIPTION OF THE DRAWINGS

FIG. 1 is a configurational view of a conventional CDMA communication apparatus;
FIG. 2A to FIG. 2D are diagrams of conventional signal formats;
FIG. 3A to FIG. 3D are diagrams of conventional transmission power patterns;
FIG. 4 is a configurational view of a CDMA communication apparatus according to a first embodiment of the invention;
FIG. 5A to FIG. 5G are diagrams of signal formats used in the first embodiment;
FIG. 6A to 6C are diagrams of transmission power patterns used in the first embodiment;
FIG. 7 is a configurational view of a CDMA communication apparatus according to a second embodiment of the invention;
FIG. 8A to FIG. 8G are diagrams of signal formats used in the second embodiment;
FIG. 9A to FIG. 9C are diagrams of transmission power patterns used in the second embodiment;
FIG. 10 is a configurational view of a CDMA communication apparatus according to a third embodiment of the invention;
FIG. 11A to 11G are diagrams of signal formats used in the third embodiment;
FIG. 12A and FIG. 12B are diagrams of transmission power patterns used in the third embodiment;
FIG. 13 is a configurational view of a CDMA communication apparatus according to a fourth embodiment of the invention;
FIG. 14A to FIG. 14G are diagrams of signal formats used in the fourth embodiment;
FIG. 15A and FIG. 15B are diagrams of transmission power patterns used in the fourth embodiment;
FIG. 16A and FIG. 16B are diagrams of signal formats of the first slot;
FIG. 17 is a configurational view of a CDMA communication apparatus according to a fifth embodiment of the invention; and
FIG. 18A to FIG. 21B are diagrams of signal formats used in the fifth embodiment.

### DETAILED DESCRIPTION OF THE PREFERRED EMBODIMENTS

A CDMA communication apparatus according to the invention comprises a rate judging section which judges the rate of transmission data by the first slot of transmission frame, a level controlling section which carries out processing by which the transmission power of transmission control information given to the top of the respective slots after the second slot is made identical to that of the transmission data, and a transmission section for transmitting frames processed by uniform transmission power responsive to the result of judgement.

With this construction, since it is possible to transmit transmission frames by uniform transmission power even though the transmission data rate is high, or low, or no transmission data exists, generation of specified cyclic pulses can be suppressed, and it is possible to prevent peripheral devices, which are easily subjected to receive influences from cyclic signals, from being adversely influenced.

Furthermore, in the CDMA communication apparatus according to the invention, the level controlling section may be provided with a multiplexing section which multiplexes dummy signals onto transmission frames if no transmission data exists.

With this construction, even though no transmission data is given, it is possible to transmit transmission frames by uniform transmission power. Therefore, generation of specified cyclic pulses can be suppressed, and it is possible to prevent peripheral devices, which are easily subjected to receive influences from cyclic signals, from being adversely influenced.

Furthermore, the CDMA communication apparatus according to the invention may be provided with a rate judging section for judging the transmission data rate by the first slot of transmission frame; a spread controlling section which spreads transmission controlling information, which constitutes the respective slots after the second slot, and transmission data to the entirety of slot; a transmission section for transmitting a frame constituted by a slot spread by uniform transmission power responsive to the result of judgement.

With this construction, the transmission controlling information and transmission data can be spread to the entirety of slot, and the transmission frame can be transmitted by uniform transmission power. Resultantly, it is possible to suppress generation of specified cyclic pulses, and it is possible to prevent peripheral devices, which are easily subjected to receive influences from cyclic signals, from being adversely influenced.

Furthermore, in the CDMA communication apparatus according to the invention, the spread controlling section may spread the transmission controlling information to the entirety of slot in a case where no transmission data is given.

With this construction, even in a case where no transmission data is given, the transmission controlling information and transmission data can be spread to the entirety of slot, wherein the transmission frame can be transmitted by uniform transmission power. Resultantly, it is possible to suppress generation of specified cyclic pulses, and it is possible to prevent peripheral devices, which are easily subjected to receive influences from cyclic signals, from being adversely influenced. Still furthermore, since it is not necessary for transmit dummy signals, influences exerting onto other users can be suppressed to be low.

In the CDMA communication apparatus according to the present invention, in the case that the rate of the transmission data is low, the transmission section transmits the transmission controlling information and transmission data by the first slot by the same transmission power and control may be carried out so that the transmission is brought to an end immediately after the transmission data is transmitted.

With this construction, even in a case where the transmission data rate is low, since slots including and after the second slot are suppressed by uniform transmission power, generation of specified cyclic pulses is suppressed, and it is possible to prevent peripheral devices, which are easily subjected to receive influences from cyclic signals, from being adversely influenced.

Furthermore, the CDMA communication apparatus according to the invention may be provided with a rate change judging section for judging whether or not the transmission data rate changes, and a transmission controlling sections which, in a case where the rate is not changed, transmits transmission controlling information of the first slot of the next frame by the same transmission power as that of the frame being transmitted, and, in a case where the rate is changed, transmits transmission controlling information of the next first slot by the same transmission power as that on the commencement of transmission, according to the result of judgement.

With this construction, only in a case where the transmission data rate is changed, transmission controlling information is transmitted by the first slot of the respective frames by the same transmission power as that on the commencement of transmission, and in a case where the transmission data rate is not changed, the transmission controlling information and transmission data can be transmitted by uniform transmission power. Resultantly, even in a case where no transmission data is given, generation of pitch signals by frame can be prevented, and generation of specified cyclic pulses can be suppressed. Furthermore, it is possible to prevent peripheral devices, which are easily subjected to receive influences from cyclic signals, from being adversely influenced.

Furthermore, in the CDMA communication apparatus according to the invention, the transmission controlling section may transmit, at random, transmission controlling information of the first slot of transmission frames by the same transmission power as that on the commencement of transmission in a case where transmission is continuously transmitted by the same transmission power.

With this construction, since in a case where transmission is continuously transmitted by the same transmission power the transmission controlling information can be transmitted at random by the same transmission power as that on the commencement of transmission, it is possible to correct an erroneous state even though a mistake arises in the rate judgement when the transmission data rate is changed.

Furthermore, in the CDMA communication apparatus according to the invention, the transmission controlling information may include a pilot symbol and a power controlling signal. With this construction, it is possible to securely carry out transmission receiving of a frame including a plurality of slots.

Furthermore, in the CDMA communication apparatus according to the invention, on the basis of the result of judgement, in a case where no transmission data is given, transmission controlling information of the first slot and specified pattern data can be transmitted by the same transmission power, and in a case where the transmission data rate is low, transmission data may be repeatedly transmitted along with transmission of the transmission controlling information and transmission data.

With this construction, since it is possible to carry out pattern matching at the receiving side, the receiving side can easily judge the transmission data rate in the first slot.

Furthermore, the CDMA communication apparatus is applicable to a mobile station apparatus and a base station apparatus. The mobile station apparatus and base station apparatus constitute a CDMA communication system.

With this construction, even in a case where the transmission data rate is high or low, and where no transmission data is given, transmission frames can be transmitted by uniform transmission power. Therefore, generation of specified cyclic pulses can be suppressed, and it is possible to prevent peripheral devices, which are easily subjected to receive influences from cyclic signals, from being adversely influenced.

A CDMA communication method according to the invention is able to judge the transmission data rate by the first slot of a transmission frame, and transmit transmission controlling information, which is transmitted by slots including and after the second slot, and transmit transmission data responsive to the result of the abovementioned judgement.

By this method, even in a case where the transmission data rate is high or low, and where no transmission data is given, transmission frames can be transmitted by uniform transmission power. Therefore, generation of specified cyclic pulses can be suppressed, and it is possible to prevent peripheral devices, which are easily subjected to receive influences from cyclic signals, from being adversely influenced.

In the CDMA communication method according to the invention, when no transmission data is given in compliance with the result of judgement, only the transmission controlling information is transmitted by the first slot, wherein the transmission controlling information to be transmitted by slots including and after the second slot may be transmitted by smaller transmission power than the transmission power of the first slot, and dummy signals may be transmitted by the same transmission power as the smaller transmission power.

By this method, in a case where no transmission data is given, it is possible to transmit transmission frames by uniform transmission power. Therefore, generation of specified cyclic pulses can be suppressed, and it is possible to prevent peripheral devices, which are easily subjected to receive influences from cyclic signals, from being adversely influenced.

Furthermore, in the CDMA communication method according to the invention, in a case where the transmission data rate is low in compliance with the result of judgement, the transmission controlling information and transmission data may be transmitted by the first slot, wherein in slots including and after the second slot, the transmission controlling information and transmission data may be transmitted after the sum of the symbol length of the transmission controlling information and transmission data is made equal to the slot length.

By this method, even in a case where the transmission data rate is low, it is possible to make the sum of the symbol length of the transmission controlling information and transmission data equal to the slot length, wherein transmission frames can be transmitted by uniform transmission power. Therefore, generation of specified cyclic pulses can be suppressed, and it is possible to prevent peripheral devices, which are easily subjected to receive influences from cyclic signals, from being adversely influenced.

In the CDMA communication method according to the invention, in a case where the transmission data rate is low in compliance with the result of judgement, the transmission controlling information and transmission data are transmitted by the first slot by the same transmission power, and the transmission may be brought to an end on the way immediately after the transmission of the abovementioned transmission data is finished.

By this method, even in a case where the transmission data rate is low, since slots including and after the second slot are suppressed by uniform transmission power. Therefore, generation of specified cyclic pulses can be suppressed, and it is possible to prevent peripheral devices, which are easily subjected to receive influences from cyclic signals, from being adversely influenced.

Furthermore, in the CDMA communication method according to the invention, in a case where no transmission data is given, only the transmission controlling information is transmitted by the first slot, and the transmission controlling information to be transmitted by slots including and after the second slot may be spread to the entirety of slot for transmission.

By this method, even in a case where no transmission data is given, the transmission controlling information and transmission data can be spread to the entirety of slot and transmission frames can be transmitted by uniform transmission power. Therefore, generation of specified cyclic pulses can be suppressed, and it is possible to prevent peripheral devices, which are easily subjected to receive influences from cyclic signals, from being adversely influenced. Still furthermore, since it is not necessary to transmit any dummy signal, influences exerted onto other users can be suppressed to be low.

Furthermore, in the CDMA communication method according to the invention, in a case where the transmission data rate is low in compliance with the result of judgement, the transmission controlling information and transmission data are transmitted by the first slot and the transmission controlling information and transmission data may be spread to the entirety of slot for transmission in slots including and after the second slot.

By this method, the transmission controlling information and transmission data in slots including and after the second slot can be spread to the entirety of slot, and transmission frames can be transmitted by uniform transmission power. Therefore, generation of specified cyclic pulses can be suppressed, and it is possible to prevent peripheral devices, which are easily subjected to receive influences from cyclic signals, from being adversely influenced.

Furthermore, in the CDMA communication method according to the invention, in a case where no transmission data is given in compliance with the result of judgement, transmission controlling information and specified pattern data may be transmitted by the first slot by the same transmission power. Furthermore, in the CDMA communication method according to the invention, in a case where the transmission data rate is low in compliance with the result of judgement, the same transmission data may be further repeatedly transmitted along with the transmission of transmission controlling information and specified pattern data by the first slot.

By such a method, it is possible to carry out pattern matching at the receiving side. Resultantly, the receiving side is able to easily judge the transmission data rate at the first slot.

Furthermore, in the CDMA communication method according to the invention, it is judged whether or not the transmission data rate changes. If not changed, the transmission controlling information of the first slot of the next frame is transmitted by the same transmission power as that of the frame being transmitted, and if changed, the transmission controlling information of the next first slot may be transmitted by the same transmission power as that on the commencement of transmission.

By this method, only in a case where the transmission rate is changed, the transmission controlling information is transmitted by the first slot of the respective frames by the transmission power which is available on the commencement of transmission, and in a case where the transmission rate is not changed, the transmission controlling information and transmission data can be transmitted by uniform transmission power. Therefore, in a case where a silent state is continued, that is, no transmission data is given, it is possible to prevent by-frame pitch signals from being generated, and generation of specified cyclic pulses can be suppressed, and it is possible to prevent peripheral devices, which are easily subjected to receive influences from cyclic signals, from being adversely influenced.

Still furthermore, in the CDMA communication method according to the invention, when transmission is continuously carried out by the same transmission power, the transmission controlling information of the first slot of a transmission frame may be transmitted, at random, by the same transmission power as that on the commencement of transmission.

By this method, in a case where transmission is continuously carried out by the same transmission power, it is possible to transmit transmission controlling information at random by the transmission power which is available on the commencement of transmission. Therefore, even though the judgement is erroneous when the transmission rate is changed, this erroneous state can be corrected.

Furthermore, in the CDMA communication method according to the invention, the transmission controlling information may include a pilot symbol and a power controlling signal. By this method, it is possible to securely carry out transmission and receiving, which are composed of a plurality of slots.

Hereinafter, a detailed description is given of preferred embodiments of the invention with reference to the accompanying drawings.

### (Embodiment 1)

In the first embodiment of the invention, a description is given of a case where a pilot symbol and a TPC (power controlling signal) symbol are transmitted to a fixed position at a fixed transmission power in only the top slot of a frame, not depending on a rate, symbols other than the above are transmitted in response to the rate, and further in slots including and after the second slot, a pilot symbol and a TPC (power controlling signal) symbol are transmitted by a transmission power responsive to the data rate along with data without changing the positions thereof. Thereby, generation of pulses in every slot can be prevented, wherein unnecessary linear spectra can be suppressed.

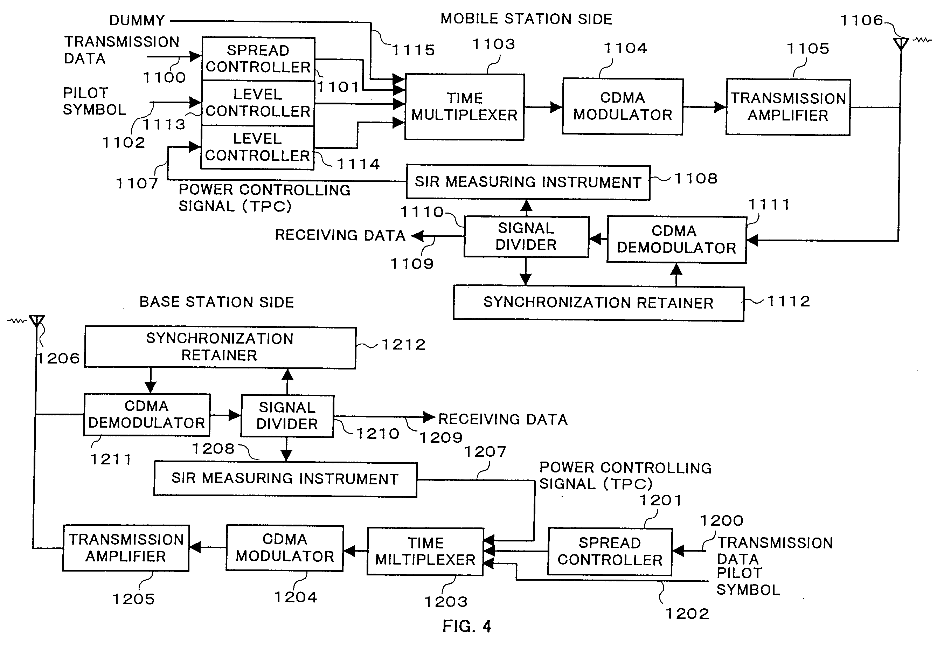

FIG. 4 is a configurational view showing a mobile station apparatus and a base station apparatus of a CDMA communication system according to the first embodiment. In FIG. 4, a mobile station of the CDMA communication system is mainly composed of a spread controller 1101 into which transmission data 1100 is inputted; a level controller 1113 into which pilot symbol 1102 is inputted; a level controller 1114 into which power controlling signal (TPC) 1107 is inputted; a time multiplexer 1103 for multiplexing the output of spread controller 1101, level controller 1113, and level controller 1114, with dummy signal 1115; a CDMA modulator 1104; a transmission amplifier 1105; an antenna 1106; an SIR measurement instrument 1108 for outputting the power controlling signal (TPC) 1107 to the time multiplexer 1103; a signal divider 1110 for outputting receiving data 1109; a CDMA demodulator 1111; and a synchronization retainer 1112.

On the other hand, a base station of the CDMA communication system is mainly composed of a spread controller 1201 into which transmission data 1200 is inputted; a time multiplexer 1203 for multiplexing the output of spread controller 1201, pilot symbol 1202, and power controlling signal (TPC) 1207 described later; a CDMA modulator 1204; a transmission amplifier 1205; an antenna 1206; an SIR measurement instrument 1208 for outputting the power controlling signal (TPC) 1207 to time multiplexer 1203; a signal divider 1210 for outputting receiving data 1209; a CDMA demodulator 1211; and a synchronization retainer 1212.

Next, a description is given of transmission processing of a mobile station. Transmission data 1100 is controlled for spread by spread controller 1101. That is, if the transmission rate is low, the data is processed so that the same has a small amplitude and a long symbol length, and if the transmission rate is high, the data is processed so that the same has a large amplitude and a short symbol length.

The amplitude of pilot symbol 1102 is processed by level controller 1113 so as to have the same amplitude as that of the data, and the amplitude of power controlling signal (TPC) 1107 is processed by level controller 1114 so as to have the same amplitude as that of the data. In time multiplexer 1103, time multiplexing is given to these results and dummy signals 1115, and this is CDMA-modulated by CDMA modulator 1104 and amplified by transmission amplifier 1105. Thereafter, the same is transmitted through antenna 1106.

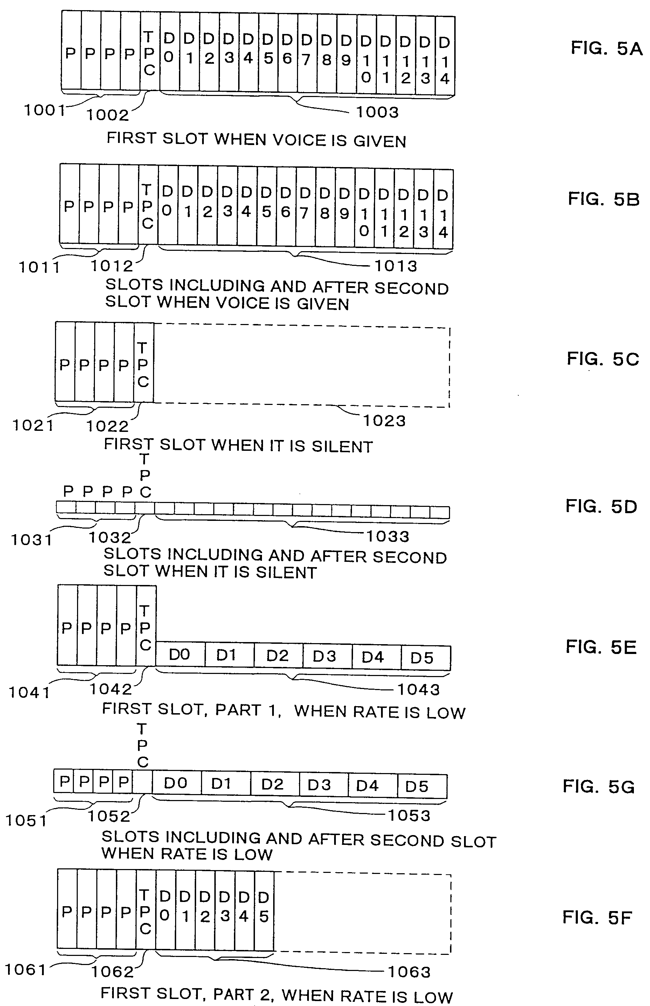

Next, a description is given of signal format with reference to FIG. 5, wherein a plurality of slots are defined to be a frame, and it is assumed that the transmission rate is fixed in a frame. In a case where the transmission data rate is high, as shown in FIG. 5A, pilot symbol 1001, TPC symbol 1002 and data symbol 1003 are transmitted by the same transmission power in only the first slot. In this case, as shown in FIG. 5B, pilot symbol 1011, TPC symbol 1012 and data symbol 1013 are transmitted by the same transmission power in slots including and after the second slot. Furthermore, if no transmission data is given, as shown in FIG. 5C, the pilot symbol 1021 and TPC symbol 1022 of the first slot are transmitted by the same transmission power as that on the commencement of transmission, the transmission power of the data symbol 1023 is made zero.

On the other hand, as shown in FIG. 5D, in a case where no data is given, pilot symbol 1031 and TPC symbol 1032 are transmitted in slots including and after the second slot at the same position as that shown in FIG. 5A by smaller transmission power than that shown in FIG. 5A, and a dummy signal is further transmitted, as in the above, by the same transmission power after the TPC.

Furthermore, if the transmission rate is low, as shown in FIG. 5E, pilot symbol 1041 and TPC symbol 1042 of the first slot are transmitted by the same transmission power as that on the commencement of transmission, and with respect to data symbol 1043, the same is transmitted by small transmission power instead of lengthening the time length of symbol.

Furthermore, if the data rate is low, as shown in FIG. 5F, pilot symbol 1061, TPC symbol 1062, and data symbol 1063 are transmitted by the same transmission power as that on the commencement of transmission, and the transmission may be brought to an end on the way since data is a little.

Still furthermore, if the transmission rate is low, as shown in FIG. 5G, pilot symbol 1051, TPC signal 1052 and data symbol 1053 are transmitted by the same transmission power for slots including and after the second slot so as to make the sum of the symbol length equal to the slot length, wherein the transmission power may be adjusted so that the quality of the data symbol 1053 is made the same as that of the data symbol 1003.

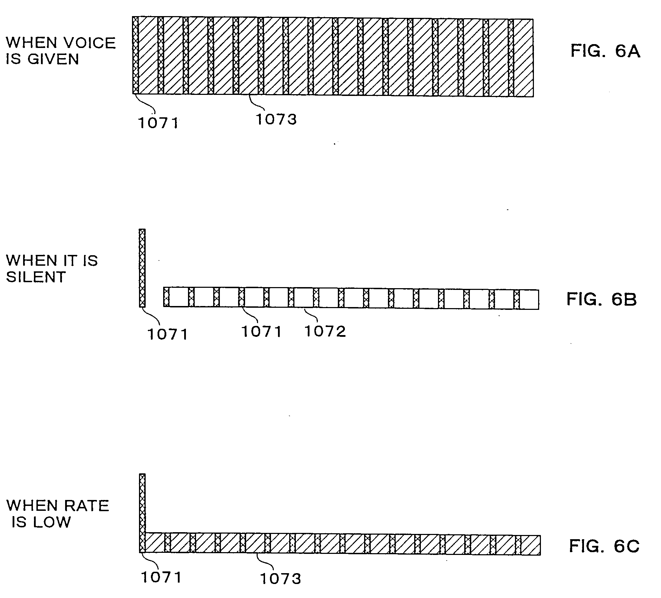

Next, a description is given of the entirety of frame with reference to FIG. 6. If the data rate is high, the transmission power pattern becomes as shown in FIG. 6A, and the transmission power of transmission bit 1071 becomes the same as that of the data 1073. If no data is given, the transmission power pattern becomes as shown in FIG. 6B, wherein the transmission power of the transmission power bit 1071 and empty data 1072 in slots including and after the second slot is low while the transmission power of only the transmission controlling bit 1071 of the first slot is high. In a case where the data rate is low, the transmission power pattern becomes as shown in FIG. 6C, wherein the transmission power of the transmission controlling bit and data 1073 in slots including and after the second slot is low while the transmission power of only the transmission controlling bit 1071 of the first slot is high. In either case, the transmission power is made uniform in slots including and after the second slot.

From the above, since no cyclic signal repeating by slot time exists in any data rate, it is possible to prevent peripheral devices, which are easily subjected to receive influences from cyclic signals, from being adversely influenced.

On the other hand, the receiving side of a base station receives data through antenna 1206, demodulates by CDMA demodulator 1211, and separates signals by signal divider 1210. Using the pilot symbol, synchronization retainer 1212 retains synchronization, wherein the synchronization can be retained so that the received signals are stably demodulated by CDMA demodulator 1211. Furthermore, using the pilot symbol and TPC symbol, SIR (signal/interference ratio) of the reverse link circuit is calculated by SIR measurement instrument 1208. On the basis thereof, the power controlling signal (TPC) 1207 which controls the value of the transmission power of the reverse link circuit is calculated.

Furthermore, the transmission at the base station side and receiving the mobile station side are similar to the transmission at the base station side and receiving at the mobile station side according to prior art. Furthermore, since such a problem by which peripheral devices influenced by cyclic signals are adversely influenced, arises in only the reverse link circuit, signals in the forward link circuit are processed as before.

Transmission data 1200 is spread-controlled by spread controller 1201. That is, if the transmission data rate is low, the transmission data is processed so that the same has a small amplitude and a long symbol length, and if the transmission data rate is high, the transmission data is processed so that it has a large amplitude and a short symbol length. As a result, the time multiplexer 1203 multiplexes the pilot symbol 1202 and the power controlling signal (TPC) 1207 obtained by SIR measurement instrument 1208, the transmission data is CDMA-modulated by CDMA modulator 1204, is amplified by transmission amplifier 1205, and is transmitted through antenna 1206.

The receiving side of a mobile station receives data through antenna 1106, demodulates the same by CDMA demodulator 1111, and separates signals by signal divider 1110. Synchronization retainer 1112 retains synchronization by using pilot symbols, wherein synchronization is retained so that the received signals can be stably demodulated by CDMA demodulator 1111. Furthermore, using the pilot symbols and TPC symbols, SIR (signal/interference ratio) of the reverse link circuit is calculated by SIR measurement instrument 1108. On the basis thereof, the power controlling signal (TPC) 1107 which controls the value of transmission power of the reverse link circuit is calculated.

As described above, since the pilot symbol and power controlling signal of the first slot are fixed regardless of rate, it is possible to carry out the SIR measurement and power control of the section without any delay. Furthermore, by measuring the transmission power of the section coming after the TPC of the first slot, it is possible to judge the rate of transmission data. Therefore, in slots including and after the second slot, the transmission control can be carried out by using the result of judgement, and it is possible to prevent cyclic pulses from being generated due to the pilot symbols and TPC at every slot. Resultantly, it is possible to prevent peripheral devices, which are subjected to receive influences by cyclic signals, from being adversely influenced thereby.

### (Embodiment 2)

In the second embodiment of the invention, a description is given of a case where a pilot symbol and a TPC (power controlling signal) symbol are transmitted to a fixed position at a fixed transmission power in only the top slot of a frame, not depending on a rate, symbols other than the above are transmitted in response to the rate, and further in slots including and after the second slot, data of the pilot symbol and TPC (power controlling signal) symbol are transmitted by the transmission power and symbol time responsive to the data rate. Thereby, generation of pulses in every slot can be prevented, wherein unnecessary linear spectra can be suppressed, and it is possible to transmit pilot signals and TPC at a sufficient quality.

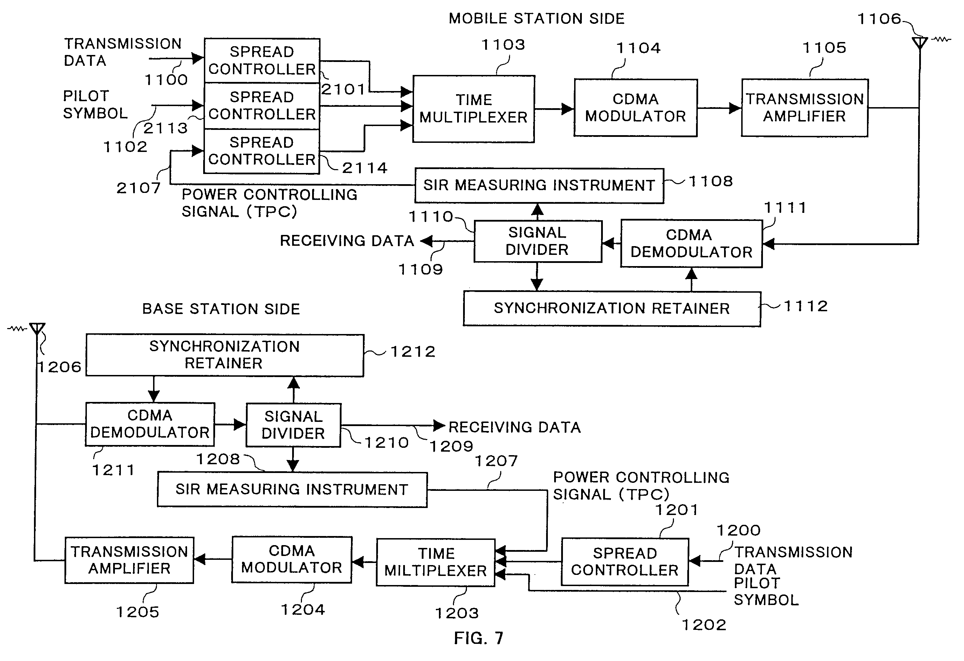

FIG. 7 is a configurational view showing a mobile station and a base station of the CDMA communication system according to the second embodiment. In FIG. 7, spread controllers 2113, 2114 are provided instead of level controllers 1113, 1114 constructed as shown in FIG. 4. All the other construction is the same as that shown in FIG. 4, and the description thereof is omitted.

A description is given of a transmission processing of a mobile station of the CDMA communication system according to the second embodiment constructed as described above. Transmission data 1100 is spread-controlled by spread controller 1101. That is, if the transmission data rate is low, the transmission data is processed so as to have a small amplitude and a longer symbol length, and if the transmission data rate is high, the transmission data is processed so as to have a large amplitude and a short symbol length. The pilot symbol 2102 and power control signal 1107 are spread to the entirety of transmission slot along with the transmission data by spread controllers 2113, 2114.

Time multiplexer 1103 multiplexes the output of the abovementioned spread controllers 1101, 2113, 2114 and the multiplexed outputs are CDMA modulated by CDMA modulator 1104, amplified by transmission amplifier 1105 and transmitted through antenna 1106.

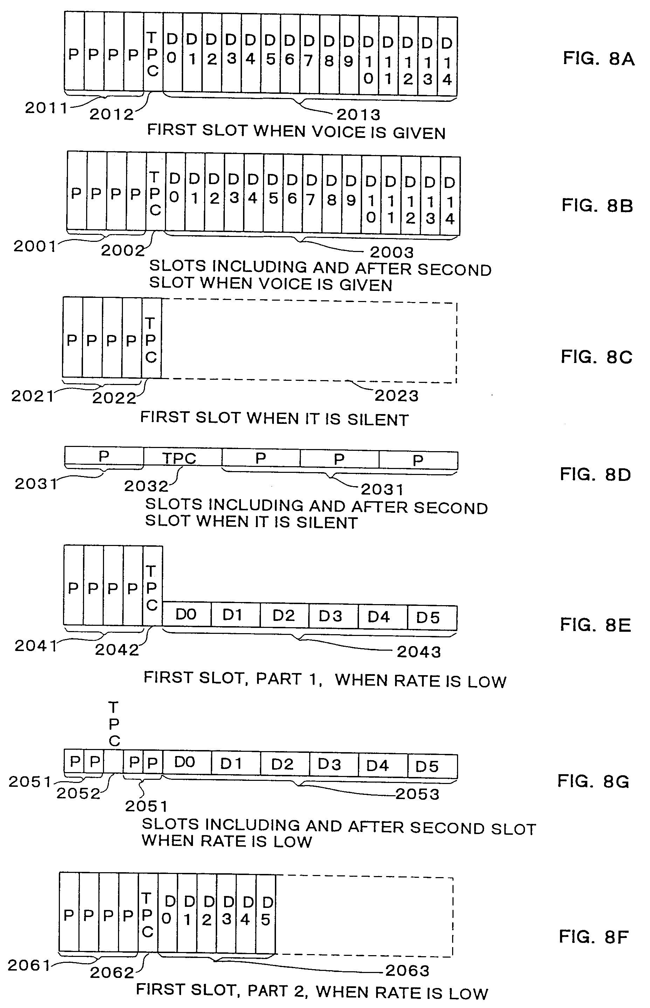

Next, a description is given of signal format with reference to FIG. 8. Herein, a plurality of slots are defined to be a frame, and it is assumed that the transmission rate is fixed in a frame. If the transmission data frame is high, as shown in FIG. 8A, in only the first slot, pilot symbol 2011, TPC symbol 2012, and data symbol 2013 are transmitted by the same transmission power. In this case, in slots including and after the second slot, as shown in FIG. 8B, pilot symbol 2001, TPC symbol 2002, and data symbol 2003 are transmitted by the same transmission power.

Furthermore, if no transmission data is given, as shown in FIG. 8C, pilot symbol 2021 and TPC symbol 2022 of the first slot are transmitted by the same transmission power as that on the commencement of transmission, and the transmission power of data symbol 2023 is made zero. On the other hand, as shown in FIG. 8D, if no data is given, pilot symbol 2031 and TPC symbol 2032 are spread to the entirety of slot in slots including and after the second slot, and they are transmitted by smaller transmission power than in the case shown in FIG. 8A.

Furthermore, if the data rate is low, as shown in FIG. 8E, pilot symbol 2041 and TPC symbol 2042 of the first slot are transmitted by the same transmission power as that on the commencement of transmission, wherein data symbol 2043 is transmitted with small transmission power instead of lengthening the symbol time length. Thereby, the quality of data symbol 2043 can be made equivalent to that of data symbol 2013.

Furthermore, if the data rate is low, as shown in FIG. 8F, pilot symbol 2061 and TPC symbol 2062 may be transmitted by the same transmission power as that on the commencement of transmission and data symbol 2063 may be transmitted by the same transmission power. In this case, since the data is a little, the transmission is brought to an end on the way. Thereby, the quality of data symbol 2063 can be made equal to that of data symbol 2013.

Furthermore, if the data rate is low, as shown in FIG. 8G, pilot symbol 2051, TPC signal 2052, and data symbol 2053 are transmitted by the transmission power in slots including and after the second slot, and the symbol length is processed so that the sum of these lengths becomes a slot length. Furthermore, the transmission power is adjusted so that the quality of data symbol 2053 becomes the same as that of data symbol 2013.

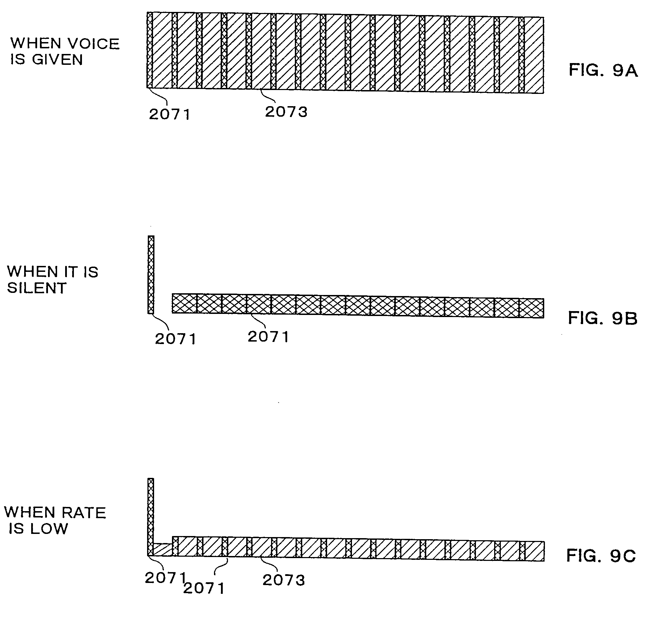

Next, a description is given of the entirety of a frame with reference to FIG. 9. If the data rate is high, the transmission power pattern becomes as shown in FIG. 9A, wherein the transmission power of transmission controlling bit 2071 becomes the same as that of data 2073. If no data is given, the transmission power pattern becomes as shown in FIG. 9B, wherein the transmission power of only the transmission controlling bit 2071 of the first slot is high, and the transmission power of the transmission power bit 2071 of slots including and after the second slot is low. If the data rate is low, the transmission power pattern becomes as shown in FIG. 6C, wherein the transmission power of only the transmission controlling bit 2071 of the first slot is high, and the transmission power of the transmission controlling bit 2071 and data 2073 of slots including and after the second slot is low. In any case, the transmission power of slots including and after the second slot becomes uniform. Furthermore, since the processing of a base station is identical to that of the first embodiment, the description thereof is omitted.

From the above description, since there is no cyclic signal repeating in the slot time in any data rate, it is possible to prevent peripheral devices, which are subjected to receive influences from cycle signals, from being adversely influenced.

### (Embodiment 3)

In the third embodiment, a description is given of a case where pilot symbol and TPC (power controlling signal) symbol are transmitted by a fixed transmission power to a fixed position in the top slot of frame, not depending on the rate, all the other symbols are transmitted in response to rates, and further pilot symbol and TPC (power controlling signal) symbol are transmitted by transmission power responsive to the data rate along with data without changing the positions thereof.

Thereby, it is possible to prevent pulses from occurring slot by slot, wherein unnecessary linear spectra can be suppressed. Furthermore, even in a case where a state where no data is given is continued, it is possible to suppress frame-by-frame linear spectra due to cyclic signals by causing irregular pulses not to be produced.

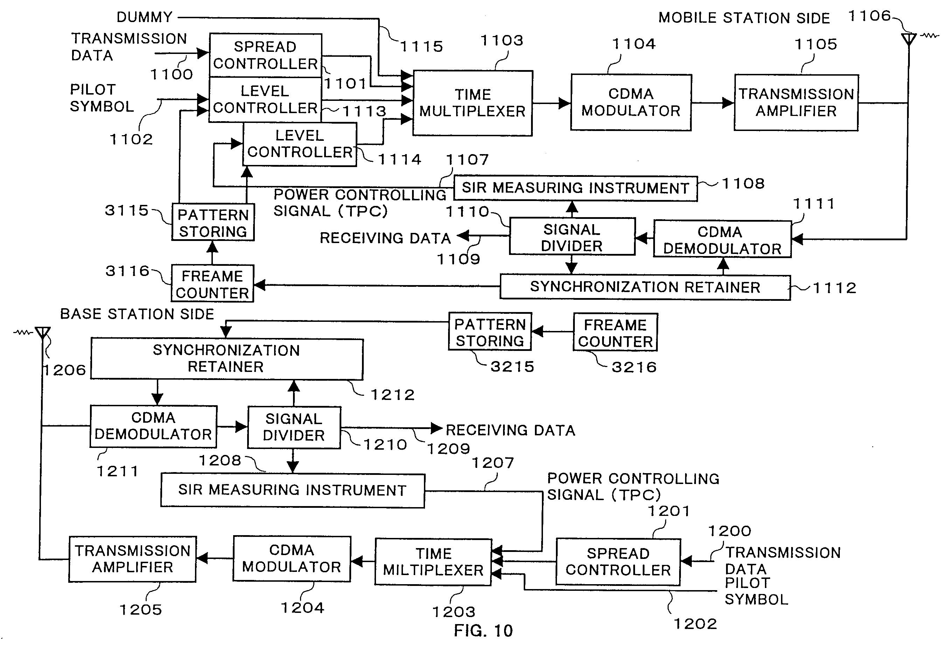

FIG. 10 is a configurational view showing a mobile station and a base station of the CDMA communication system according to the third embodiment. In FIG. 10, frame counters 3116, 3216 and pattern storing section 3115, 3215 are added to the construction shown in FIG. 4.

These frame counters 3116, 3216 are for counting to which frame of super frame the frame belongs, which transmits pilot symbol and TPC (power controlling signal) symbol (transmission controlling information) of the first slot at random by the same transmission power as that on the commencement of transmission. Frame counter 3216 in the base station independently operates. On the other hand, frame counter 3116 in a mobile station acquires synchronization by synchronization retainer 3112 and is caused to operate on the basis of the synchronization signal. Therefore, the same is in synchronization with frame counter 3216 in the base station.

Furthermore, pattern storing section 3115 at the mobile station side and that at the base station side are of the same construction. Pattern storing section 3115, 3215 stores, in memory, whether or not special format is used in the first slot even in a case where the same rate is continued. Here, the special format section a signal format in a case where the transmission controlling information is transmitted by the same transmission power as that on the commencement of transmission.

Spread controller 1101,, level controller 1113, and level controller 1114 control a format in compliance with the output of pattern storing section 3115.

Furthermore, synchronization retainer 1212 at the base station side is constructed so that the same can generate a receiving timing in compliance with the output pattern storing section 3215 and accurately receive the reverse link signal by CDMA demodulator 1211. All the other construction is identical to that of the first embodiment. Therefore, the description thereof is omitted.

In the first embodiment, if a silent state is continued since a special format is applied in all the first slots, there is a case where a frame-by-frame pitch signal is generated. Therefore, in the third embodiment, a special format is employed in the first slot in only a case where the transmission rate is changed.

However, if it is assumed that the transmission rate is erroneous when the signal rate is changed, the state is continued until the rate is changed next. Therefore, a special format is employed for the first slot in specified frames even though the signal rate is not changed. That is, the transmission controlling information of the first slot is transmitted at random by the transmission power which is available on the commencement of transmission. A pattern of a unit of super frame in which a plurality of frames are composed as a unit is employed to this pattern, and a random pattern is employed, in which super frame is used as a cycle. Thereby, it is possible to suppress components having frame-by-frame pitches when the same rate is continued in the first embodiment.

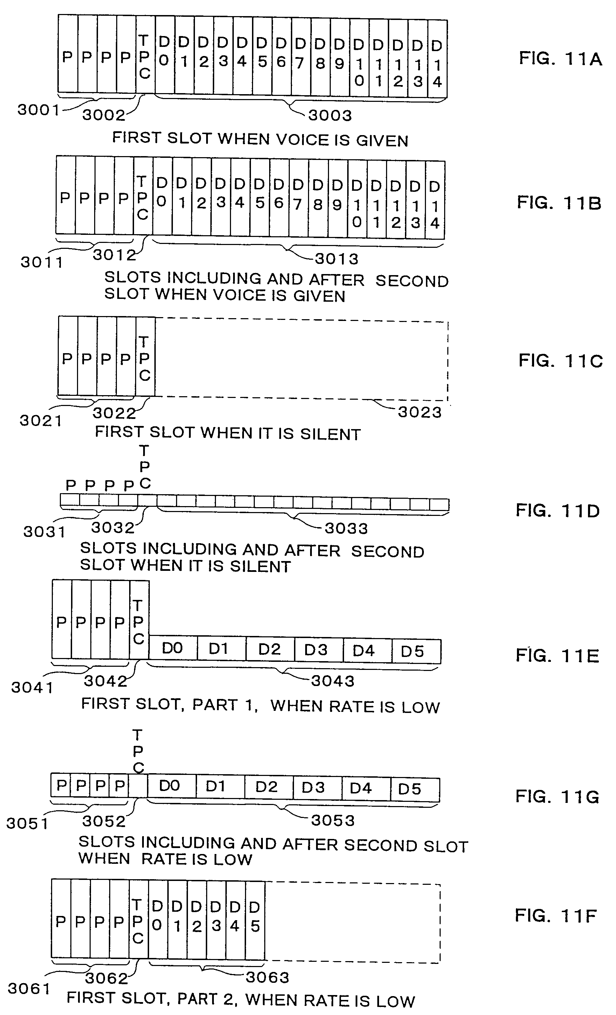

Next, a description is given of signal format with reference to FIG. 11, wherein a plurality of slots are defined to be a frame, and it is assumed that the transmission rate is fixed in a frame.

In a case where the rate of the transmission data is high, as shown in FIG. 11A, pilot symbol 3001, TPC symbol 3002 and data symbol 3003 are transmitted by the same transmission power in only the first slot. In this case, in slots including and after the second slot, pilot symbol 3011, TPC symbol 3012 and data symbol 3013 are transmitted by the same transmission power as shown in FIG. 11B. Furthermore, if no data is given, pilot symbol 3021 and TPC symbol 3022 are transmitted by the same transmission power as that on the commencement of transmission as shown in FIG. 11C, and the transmission power of the data symbol 3023 is made zero.

On the other hand, as shown in FIG. 11D, in slots including and after the second slot where no data is given, pilot symbol 3031 and TPC 3032 are transmitted at the same position as that shown in FIG. 11A and by smaller transmission power than that shown in FIG. 11A. Still furthermore, dummy signal 3033 is transmitted, as in the above, by the same transmission power after the TPC is transmitted.

Furthermore, if the data rate is low, pilot symbol 3041 and TPC symbol 3042 of the first slot are transmitted by the same transmission power as that on the commencement of transmission as shown in FIG. 11E, and the data symbol 3043 is transmitted by small transmission power instead of lengthening the symbol time length.

Furthermore, if the data rate is low, pilot symbol 3061, TPC symbol 3062 and data symbol 3063 may be transmitted by the same transmission power as that on the commencement of transmission as shown in FIG. 11F. In this case, the transmission is brought to an end on the way since the data is a little.

Still furthermore, if the data rate is low, in slots including and after the second slot, pilot symbol 3051, TPC symbol 3052 and data symbol 3053 are transmitted by the same transmission as shown in FIG. 11G so that the sum of the symbol lengths becomes a slot length, wherein the transmission power may be adjusted so that the quality of the data symbol 3053 becomes equivalent to that of data symbol 3003.

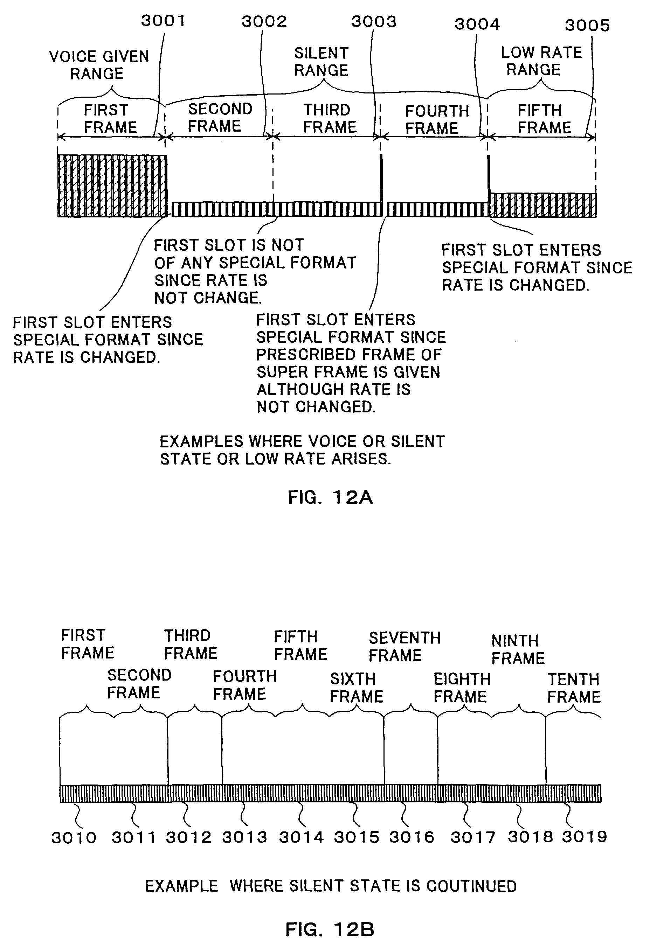

Next, a description is given of the entirety of frame with reference to FIG. 12. As shown in FIG. 12A, since the data rate is changed when shifting from the first frame 3001 being a sound range to the second frame 3002 being a silent range, a special format is employed for the first slot of the second frame.

Since the data rate is not changed from when shifting from the second frame 3002 to the third frame 3003, no special format is employed for the first slot of the third frame. For this reason, even in a case where no data is given, the transmission controlling information is able to prevent pulse-like signals from being generated. Although the data rate is not changed when shifting from the third frame 3003 to the fourth frame 3004, a special format is employed for the first slot of the fourth frame. Thereby, even though the rate judgement is made erroneous, the correction is possible.

Since the data rate is changed when shifting from the fourth frame 3004 to the fifth frame 3005, a special format is employed for the first slot of the fifth frame. Furthermore, as shown in FIG. 12B, in a case where a silent state is continued, transmission controlling information is transmitted at random in the first slot of the respective frames by the transmission power which is available on the commencement of transmission. Therefore, even though the rate judgement is made erroneous, the correction is possible.

### (Embodiment 4)

In the fourth embodiment, a description is given of a case where pilot symbol and TPC (power controlling signal) symbol are transmitted to a fixed position by a fixed transmission power regardless of the rate, and all the other symbols are transmitted in response to the rate, and further in slots including and after the second slot, pilot symbol and TPC (power controlling signal) symbol are transmitted by the transmission power responsive to the data rate along with data without changing the positions thereof.

Thereby, it is possible to prevent pulses from being generated in every slot. Furthermore, pilot symbol and TPC can be transmitted at a sufficient quality, and even in a case where a data-free state is continued, it is possible to suppress linear spectra due to frame-by-frame cyclic signals by preventing irregular pulses from being generated.

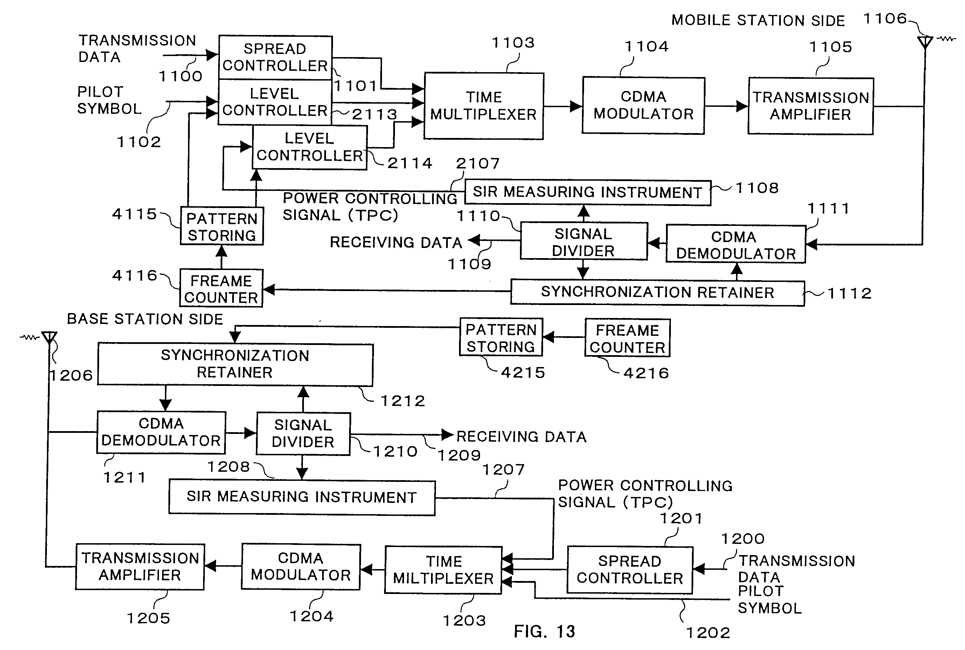

FIG. 13 is a configurational view showing a mobile station and a base station of the CDMA communication system according to the fourth embodiment. In FIG. 13, frame counters 4116, 4216 and pattern storing section 4115, 4215, shown in FIG. 10, are added to the construction shown in FIG. 7. The frame counters 4116, 4216 and pattern storing section 4115, 4215 are identical to those in the third embodiment.

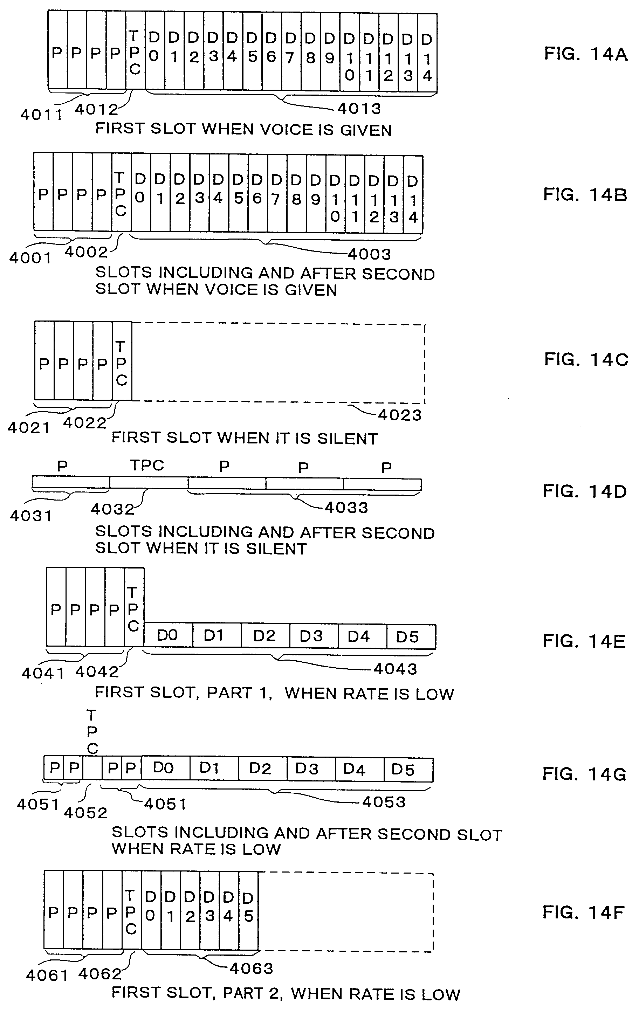

Next, a description is given of signal format with reference to FIG. 14. In the fourth embodiment, if the transmission data rate is high, pilot symbol 4011, TPC symbol 4012 and data symbol 4013 are transmitted in only the first slot by the same transmission power as shown in FIG. 14A. In this case, As shown in FIG. 14B, pilot symbol 4001, TPC symbol 4002 and data symbol 4003 are transmitted by the same transmission power in slots including and after the second slot.

Furthermore, if no transmission data is given, pilot symbol 4021 and TPC symbol 4022 of the first slot are transmitted by the same transmission power as that on the commencement of transmission as shown in FIG. 14C, and the transmission power of the data symbol 4023 is made zero. On the other hand, if no data is given as shown in FIG. 14D, pilot symbol 4031 and TPC symbol 4032 are spread to the entirety of slot in slots including and after the second slot, and they are transmitted by small transmission power in comparison with the case shown in FIG. 14A.

Furthermore, if the data rate is low, pilot symbol 4041 and TPC symbol 4042 of the first slot are transmitted by the same power as that on the commencement of transmission as shown in FIG. 14E, wherein the data symbol 4043 is transmitted by small transmission power instead of lengthening the symbol time length. Thereby, the quality of the data symbol 4043 is made equivalent to that of the data symbol 4013.

Furthermore, if the data rate is low, pilot symbol 4061 and TPC symbol 4062 are transmitted by the same power as that on the commencement of transmission as shown in FIG. 14F, and the data symbol 4063 may be transmitted by the same transmission power. In this case, the transmission is brought to an end on the way since the data is a little. Thereby, the quality of the data symbol 4063 is made equivalent to that of the data symbol 4013.

Furthermore, if the data rate is low, pilot symbol 4051, TPC signal 4052 or data symbol 4053 is transmitted by the same transmission power in slots including and after the second slot as shown in FIG. 14G, and the symbol length is processed so that the sum of these lengths becomes the slot length. Furthermore, the transmission power is adjusted so that the quality of the data symbol 4053 is made equivalent to that of the data symbol 4013.

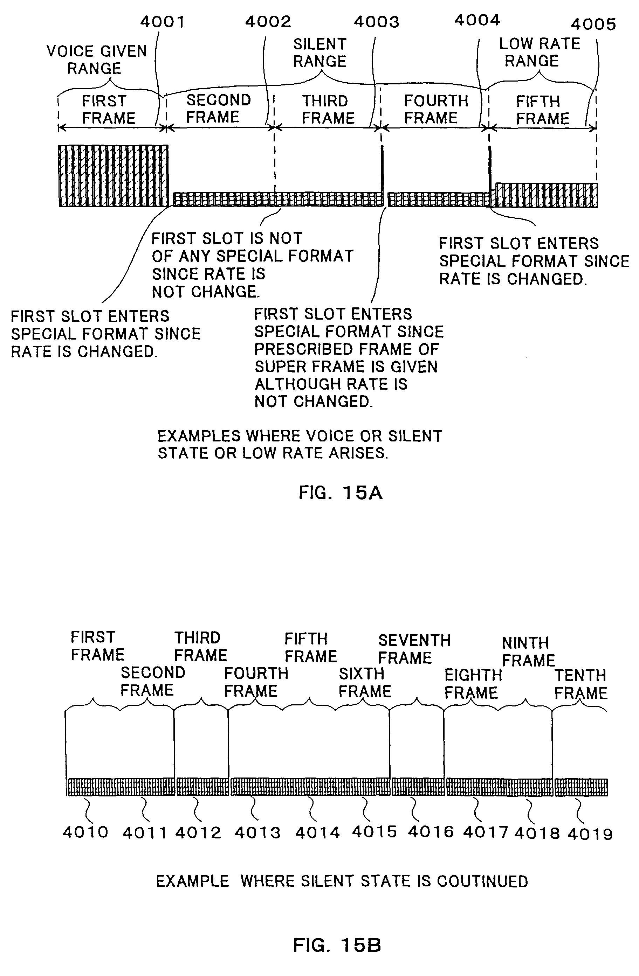

Next, a description is given of the entirety of frame with reference to FIG. 15. As shown in FIG. 15A, since the data rate is changed when shifting from the first frame 4001 being a sound range to the second frame 4002 being a silent range, a special format is employed for the first slot of the second frame. Since the data rate is not changed when shifting from the second frame 4002 to the third frame 4003, no special format is employed for the first slot of the third frame. For this reason, even in a case where no data is given, the transmission controlling information is able to prevent pulse-like signals from being generated.

Although the data rate is not changed when shifting from the third frame 4003 to the fourth frame 4004, a special format is employed for the first slot of the fourth frame. Thereby, even though the rate judgement is made erroneous, the correction can be carried out. Since the data rate is changed when shifting from the fourth frame 4004 to the fifth frame 4005, a special format is employed for the first slot of the fifth frame. Furthermore, as shown in FIG. 15B, in a case where a silent state is continued, the transmission controlling information is transmitted at random in the first slot of the respective frames by the transmission power which is available on the commencement of transmission. Therefore, even though the rate judgement is made erroneous, the correction can be carried out.

Although a description was given of a processing after the second slot of the transmission frames, the following processing is carried out with respect to the first slot.

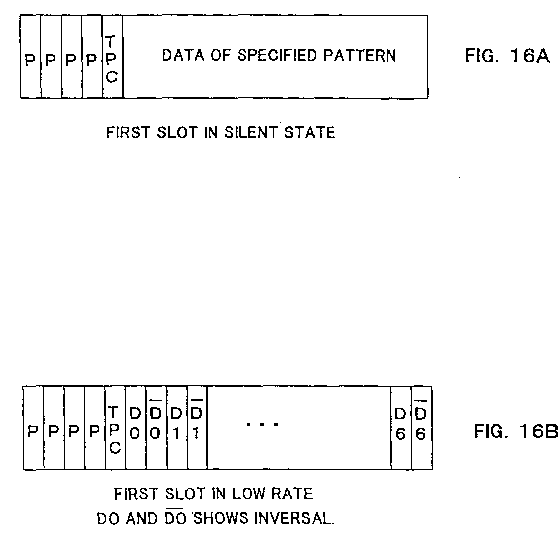

Firstly, the spread controller judges the rate of transmission data. If no transmission data is given as a result, the transmission controlling information and specified pattern data are transmitted by the same transmission power as shown in FIG. 16A.

Furthermore, the transmission data rate is low, the same data as the transmission data is repeatedly transmitted along with the transmission controlling information. For example, as shown in FIG. 16B, when the data rate is one half, the same data symbol is repeatedly transmitted two times. At this time, data symbol may be reversed at every time, for example, from 0, 1 to 1, 0.

By carrying out the abovementioned process, specified pattern data is transmitted by an empty section of a slot, and the receiving side ensures matching with the pattern. Thereby, it can be easily judged that no data is given in the receiving frame. Furthermore, by the same transmission data being repeated, the receiving side is able to judge that the transmission data rate is low. This is because, by regularly repeating transmission of the same data when the rate is low since the data is transmitted at random if the transmission data rate is high, it is possible to clearly distinguish HIGH and LOW of the data rate. Furthermore, in addition to the abovementioned method, a similar effect can be obtained by transmitting the transmission controlling information of the first slot with a transmission data rate given thereto.

### (Embodiment 5)

In the fifth embodiment, a description is given of a case where pilot symbol and TPC (power controlling signal) symbol are transmitted while being code-divided and multiplexed with respect to data. Thereby, the spread ratio of pilot symbols and TPC symbols is increased while the power is decreased. Therefore, it is possible to prevent the transmission power from being turned on and off when transmitting the pilot symbols and TPC symbols.

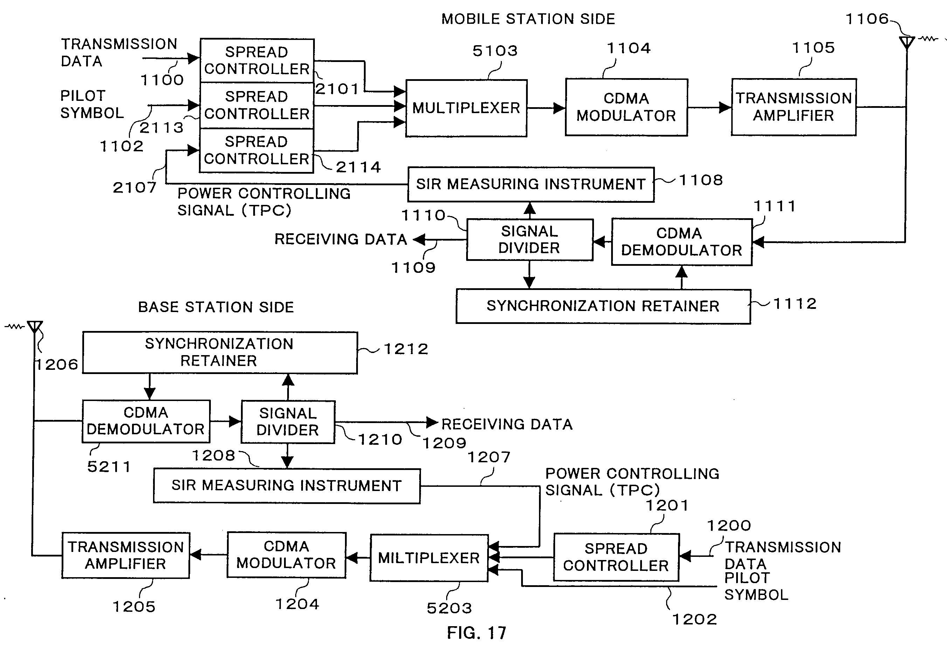

FIG. 17 is a configuration view showing a mobile station and a base station of the CDMA communication system according to the fifth embodiment. In FIG. 17, multiplexers 5103, 5203 are provided instead of time multiplexers 2103, 2203 in the construction shown in FIG. 7. Since the other construction is identical to that shown in FIG. 7, the description thereof is omitted.

A description is given of a transmission processing of a mobile station of the CDMA communication system according to the fifth embodiment, which is constructed as shown above. Transmission data 1100 is spread-controlled by spread controller 1101. That is, if the transmission data rate is low, the data is processed so that the same has a small amplitude and a long symbol length, and if the transmission data rate is high, the data is processed so that the same has a large amplitude and a short symbol length, wherein pilot symbol 2102 and power controlling signal 1107 are spread to the entirety of transmission slot along with the transmission data by spread controllers 2113, 2114.

Multiplexer 5103 multiplexes the outputs of the abovementioned spread controllers 1101, 2113, 2114, wherein the multiplexed output is CDMA-modulated by CDMA modulator 1104, amplified by transmission amplifier 1105, and transmitted through antenna 1106. The base station side multiplexes the output of the abovementioned spread controller 1201, pilot symbol 1202, and TPC 1207 when they are transmitted, wherein the multiplexed output is CDMA-modulated by CDMA modulator 1204, amplified by transmission amplifier 1205 and transmitted through antenna 1206.

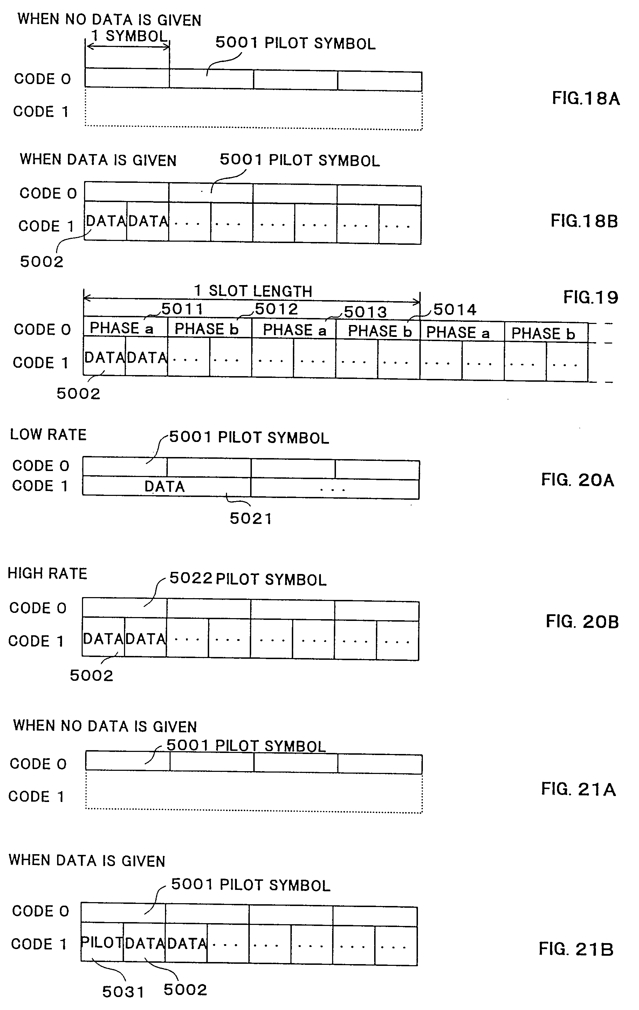

Next, a description is given of signal format with reference to FIG. 18 through FIG. 21. Herein, a plurality of slots are defined to be a frame, and it is assumed that the transmission rate is fixed in a frame.

In the embodiment, pilot symbol and TPC (power controlling signal) symbol are transmitted while being code-divided and multiplexed with respect to data. That is, as shown in FIG. 18, pilot symbol and TPC symbol, the spread ratio is increased with the power decreased are placed onto data.

If no transmission data is given, pilot symbol 5001 and TPC symbol are spread by code 0 having a comparatively large spread ratio as shown in FIG. 18A. Thereby, pilot symbol 5001 and TPC symbol are continuously transmitted. Therefore, it is possible to make the transmission power of the pilot symbol small, wherein it is possible to prevent the pilot symbol from being cyclically transmitted.

On the other hand, as shown in FIG. 18B, if data is given, pilot symbol 5001 spread by code 0 and data 5002 spread by code 1 are multiplexed. Furthermore, in cases shown in FIG. 18A and FIG. 18B, it is assumed that the power of pilot symbol is fixed at all times.

In this embodiment, the phases of pilot symbol and TPC symbol may be changed per symbol. That is, as shown in FIG. 19, phases a to d of pilot symbols 5011 to 5014 are changed in one slot in compliance with a predetermined pattern. Thus, by setting so that the phases of pilot symbols fluctuate, the cycle of repeating pattern can be lengthened. As a result, it is possible to make the transmission power of pilot symbols small, and simultaneously it is possible to further efficiently prevent pilot symbols from being cyclically transmitted.

Furthermore, in this embodiment, the power of pilot symbols and TPC symbols may be changed in response to the transmission rate. That is, in a case where the transmission rate of data 5021 is low, the power of pilot symbols 5001 is made small as shown in FIG. 20A, and in a case where the transmission rate of data 5002 is high, the power of pilot symbols 5022 is increased as shown in FIG. 20B. Thereby, the quality of signals can be further improved in a case where the transmission rate is high, wherein it is possible to lower the total quantity of interference in the system.

Furthermore, in this embodiment, data may be time-multiplexed by pilot symbols while always transmitting code-multiplexed pilot symbols and TPC symbols. That is, as shown in FIG. 21A, if no data is given, code-multiplexed pilot symbols and TPC symbols are always transmitted. On the other hand, as shown in FIG. 21B, if there is data, pilot symbols 5031 spread by code 1 which spreads data is given to the top of data. Therefore, if data is given, the line quality can be further improved, and it is possible to lower the total quantity of interference in the system while maintaining the quality of data. Furthermore, since the transmission power of pilot symbols can be made small, it is possible to prevent peripheral devices, which are subjected to receive influences from cyclic signals, from being adversely influenced.

Furthermore, since the processing of the base station is identical to that of the first embodiment, the description thereof may be omitted.

With respect to the abovementioned first to fifth embodiments, it is possible to constitute the invention in various combinations thereof.

As been made clear from the abovementioned description, according to the present invention, even in cases where the transmission data rate is high, low or no transmission data is given, since the transmission frame can be transmitted by uniform transmission power, generation of specified cyclic pulses can be suppressed, and it is possible to prevent peripheral devices, which are subjected to receive influences from cyclic signals, from being adversely influenced.

Furthermore, even in a case where the transmission data rate is low, it is possible to make the sum of symbol lengths of the transmission controlling information and transmission data equal to the slot length and to transmit the transmission frame by uniform transmission power. For this reason, generation of specified cyclic pulses can be suppressed, and it is possible to prevent peripheral devices, which are subjected to receive influences from cyclic signals, from being adversely influenced.

Furthermore, in a case where the transmission data rate is low, the transmission may be brought to an end immediately after the transmission of the transmission data of the first slot is finished. In this case, generation of specified cyclic pulses can be suppressed, and it is possible to prevent peripheral devices, which are subjected to receive influences from cyclic signals, from being adversely influenced.

In a case where no transmission data is given, the transmission controlling information and transmission data can be spread to the entirety of slot and the transmission frame can be transmitted by uniform transmission power. For this reason, generation of specified cyclic pulses can be suppressed, and it is possible to prevent peripheral devices, which are subjected to receive influences from cyclic signals, from being adversely influenced. Since it is not necessary to transmit dummy signals, influences exerted onto the other users can be suppressed to be low.

Furthermore, the transmission controlling information and transmission data in slots including and after the second slot can be spread to the entirety of slot, and the transmission frame can be transmitted by uniform transmission power. Therefore, generation of specified cyclic pulses can be suppressed, and it is possible to prevent peripheral devices, which are subjected to receive influences from cyclic signals, from being adversely influenced.

The transmission controlling information is transmitted by the first slot of the respective frames by the transmission power which is available on the commencement of transmission in only a case where the transmission rate is changed, and in a case where the transmission rate is not changed, the transmission controlling information and transmission data can be transmitted by uniform transmission power. For this reason, in a case where a silent state is continued, that is, even in a case where no transmission data is given, it is possible to prevent frame-by-frame pitch signals from being generated, wherein generation of specified cyclic pulses can be suppressed, and it is possible to prevent peripheral devices, which are subjected to receive influences from cyclic signals, from being adversely influenced.

Since the transmission controlling information is transmitted at random by the transmission power which is available on the commencement of transmission in a case where transmission is continuously carried out by the same transmission power, any erroneous state can be corrected even though the transmission rate judgement is made erroneous when the transmission rate is changed.

Furthermore, since it is possible to carry out pattern matching at the receiving side, the receiving side is able to easily judge the transmission data rate in the first slot.

## Claims

1. A CDMA communication apparatus comprising;
rate judging means for judging a transmission data rate in the first slot of a transmission frame;
level controlling means(1113,1114) for carrying out a process by which the transmission power of transmission controlling information given to the top of each slot in slots including and after the second slot is made identical to a transmission power of transmission data; and
transmitting means for transmitting said frame processed by uniform transmission power in response to said rate judging means.

2. The CDMA communication apparatus according to claim 1, wherein said level controlling means is provided with multiplexing means(1103) for multiplexing a dummy signal onto the transmission frame in a case where no transmission data is given.

3. A CDMA communication apparatus comprising;
rate judging means for judging a transmission data rate in the first slot of a transmission frame;
spread controlling means(1101) for spreading transmission controlling information, which constitutes the respective slots including and after the second slot, and transmission data to the entirety of slot; and
transmitting means for transmitting a frame composed of said slots spread by uniform transmission power in response to said judging result.

4. The CDMA communication apparatus according to claim 3, wherein said spread controlling means(1101) spreads transmission controlling information to the entirety of slot in a case where no transmission data is given.

5. The CDMA communication apparatus according claim 3, wherein said transmitting means transmits transmission controlling information and transmission data by the first slot in compliance with the result of judgement by said rate judgement means in a case where the transmission data rate is low and controls so as to cut off the transmission immediately after said transmission data is transmitted.

6. The CDMA communication apparatus according to claim 3, further comprising;
rate change judging means for judging whether or not a transmission data rate is changed; and
transmission controlling means which, if the rate is not changed, transmits transmission controlling information of the first slot of a next frame by the same transmission power as that of the frame being transmitted, and which if the rate is changed, transmits transmission control information of the next first slot by the same transmission power as that on the commencement of transmission, in compliance with the result of judgement.

7. The CDMA communication apparatus according to claim 6, wherein said transmission controlling means transmits, at random, transmission controlling information of the first slot of transmission frame in a case where transmission is continuously carried out by the same transmission power.

8. The CDMA communication apparatus according to claim 1, wherein said transmission controlling information includes a pilot symbol and a power controlling signal.

9. The CDMA communication apparatus according to claim 1, wherein, in compliance with the result of judgement, if no transmission data is given, transmission controlling information of the first slot and specified pattern data thereof are transmitted by the same transmission power, and if the transmission data rate is low, the transmission data is repeatedly transmitted while transmitting the transmission controlling information and transmission data.

10. A CDMA communication apparatus comprising:
multiplexing means(1103) for constituting a frame by multiplexing transmission controlling information and transmission data;
spread means for spreading the transmission controlling information and transmission data by different codes; and
transmission means for transmitting said processed frame.

11. The CDMA communication apparatus according to claim 1, wherein said multiplexing means(1103) constitutes transmission controlling information by patterns constituted with different phases.

12. The CDMA communication apparatus according to claim 10, further comprising;
transmission power controlling means for controlling transmission power of transmission controlling information in response to a transmission rate.

13. The CDMA communication apparatus according to claim 10, wherein said multiplexing means(1103) gives transmission controlling information to the top slot of transmission data.

14. A mobile station having a communication apparatus, said apparatus comprising;
rate judging means for judging a transmission data rate in the first slot of a transmission frame;
level controlling means(1113,1114) for carrying out a process by which the transmission power of transmission controlling information given to the top of each slot in slots including and after the second slot is made identical to a transmission power of transmission data; and
transmitting means for transmitting said frame processed by uniform transmission power in response to said rate judging means.

15. A base station having a communication apparatus, said apparatus comprising;
rate judging means for judging a transmission data rate in the first slot of a transmission frame;
level controlling means(1113,1114) for carrying out a process by which the transmission power of transmission controlling information given to the top of each slot in slots including and after the second slot is made identical to a transmission power of transmission data; and
transmitting means for transmitting said frame processed by uniform transmission power in response to said rate judging means.

16. A CDMA communication system comprising:
a mobile station having a CDMA communication apparatus according to claim 14; and
a base station having a CDMA communication apparatus according to claim 15.

17. A CDMA communication method comprising the steps of:
judging a rate of transmission data by the first slot of transmission frame; and
transmitting transmission controlling information and transmission data, which are transmitted by slots including and after the second slot, by uniform transmission power in response to the result of said judgement.

18. The CDMA communication method according to claim 17, wherein, in compliance with the result of judgement, if no transmission data is given, only the transmission controlling information is transmitted, transmission controlling information to be transmitted by slots including and after the second slot is transmitted by smaller transmission power than the transmission power of the first slot, and a dummy signal is transmitted by the same transmission power as said transmission power.

19. The CDMA communication method according to claim 17, wherein, in compliance with the result of judgement, if the transmission data rate is low, transmission controlling information and transmission data are transmitted by the first slot, and they are transmitted by slots including and after the second slot so that the sum of symbol lengths of the transmission controlling information and transmission data is made equal to a slot length.

20. The CDMA communication method according to claim 17, wherein, in compliance with the result of judgement, if the transmission data rate is low, transmission controlling information and transmission data are transmitted by the same transmission power by the first slot, and the transmission is brought to an end immediately after the transmission of said transmission data is finished.

21. The CDMA communication method according to claim 17, wherein, in compliance with the result of judgement, if no transmission data is given, only the transmission controlling information is transmitted by the first slot, and transmission controlling information to be transmitted by slots including and after the second slot are spread to the entirety of slot for transmission.

22. The CDMA communication method according to claim 17, wherein, in compliance with the result of judgement, if the transmission data rate is low, transmission controlling information and transmission data are transmitted by the first slot, and transmission controlling information and transmission data are spread to the entirety of slot in slots including and after the second slot for transmission.

23. The CDMA communication method according to claim 17, wherein, in compliance with the result of judgement, if no transmission data is given, transmission controlling information and specified pattern data are transmitted by the first slot by the same transmission power.

24. The CDMA communication method according to claim 17, wherein, in compliance with the result of judgement, if the transmission data rate is low, transmission controlling information and specified pattern data are transmitted by the first slot, and the same transmission data is repeatedly transmitted.

25. The CDMA communication method according to claim 17, wherein it is judged whether or not the transmission data rate is changed, if not changed, transmission controlling information of the first slot of a next frame is transmitted by the same transmission power as that of the frame being transmitted, and if changed, transmission controlling information of the next first slot is transmitted by the same transmission power as that on the commencement of transmission.

26. The CDMA communication method according to claim 25, wherein in a case where transmission is continuously carried out by the same transmission power, transmission controlling information of the first slot of transmission frame is transmitted, at random, by the same transmission power as that on the commencement of transmission.

27. The CDMA communication method according to claim 17, wherein said transmission controlling information includes a pilot symbol and a power controlling signal.

28. A CDMA communication method comprising the steps of:
constituting a frame by multiplexing transmission controlling information and transmission data;
spreading transmission controlling information and transmission data by different codes; and
transmitting said processed frame.

29. The CDMA communication method according to claim 28, wherein transmission controlling information is constituted by patterns constituted with different phases.

30. The CDMA communication method according to claim 28, wherein the transmission power of transmission controlling information is controlled in response to transmission rate.

31. The CDMA communication method according to claim 28, wherein transmission controlling information is given to the top slot of transmission data.
